# EUROPÄISCHE PATENTSCHRIFT

(11) **EP 1 651 488 B1**
(45) Veröffentlichungstag und Bekanntmachung des Hinweises auf die Patenterteilung: **26.12.2007**
(21) Anmeldenummer: 04763168.4
(22) Anmeldetag: 12.07.2004
(51) Int. Cl.: B60T 8/88, B60T 17/22, F15B 19/00

(54) **VERFAHREN UND VORRICHTUNG ZUM ERKENNEN EINES DEFEKTES ODER AUSFALLS EINES DRUCKLUFTVERBRAUCHERKREISES IN EINER ELEKTRONISCHEN DRUCKLUFTANLAGE FÜR FAHRZEUGE**
METHOD AND DEVICE FOR IDENTIFYING A DEFECT OR FAILURE OF A COMPRESSED AIR LOAD CIRCUIT IN AN ELECTRONIC COMPRESSED AIR INSTALLATION FOR VEHICLES
PROCEDE ET DISPOSITIF POUR DETECTER UN DEFAUT OU UNE DEFAILLANCE D'UN CIRCUIT CONSOMMATEUR D'AIR COMPRIME DANS UN SYSTEME ELECTRONIQUE A AIR COMPRIME POUR DES VEHICULES

(30) Priorität: 28.07.2003 DE 10334318; 10.12.2003 DE 10357764
(43) Veröffentlichungstag der Anmeldung: 03.05.2006
(73) Patentinhaber: WABCO GmbH, 30453 Hannover (DE)
(72) Erfinder: DETLEFS, Carsten, 30952 Ronnenberg (DE); DIEKMEYER, Heinrich, 30890 Barsinghausen (DE); LIPPELT, Frank-Dietmar, 30890 Barsinghausen (DE); REINHARDT, Joachim, 30455 Hannover (DE); STRILKA, Bernd, 30459 Hannover (DE)
(74) Vertreter: Günther, Constantin
(86) Internationale Anmeldenummer: PCT/EP2004/007648
(87) Internationale Veröffentlichungsnummer: WO 2005/014353

(56) Entgegenhaltungen:
- EP-A- 0 477 519
- WO-A-96/34785
- DE-A- 3 435 089
- US-A- 4 484 784

## Beschreibung

Die Erfindung betrifft ein Verfahren und eine Vorrichtung zum Erkennen eines Defektes oder Ausfalls eines Druckluftverbraucherkreises in einer elektronischen Druckluftanlage für Fahrzeuge.

Eine solche Vorrichtung ist aus EP 477 519 bekannt.

Es sind so genannte Mehrkreis-Schutzventile bekannt, die die Energiezufuhr in mehrere voneinander unabhängige Verbraucherkreise aufteilen und die bei Ausfall eines Verbraucherkreises, beispielsweise durch Leitungsbruch, einen Mindestdruck in den intakten Kreisen aufrechterhalten. Tritt in einem Betriebsbremskreis ein Defekt auf, durch den mehr Luft verloren geht als durch den Kompressor nachgefördert werden kann, so fällt in den Betriebsbremskreisen der Druck gemeinsam ab, bis der Druck den Schließdruck des Ventils erreicht. Der Druck im defekten Kreis fällt weiter ab, während der Schließdruck im intakten Kreis erhalten bleibt. Während der Druck im defekten Kreis weiter absinkt, kann der noch intakte Kreis wieder durch den Kompressor befüllt werden, bis der Öffnungsdruck des defekten Kreises erreicht ist. Es entsteht ein dynamisches Gleichgewicht, bei welchem die geförderte Druckluft die noch intakten Kreise (auch Nebenverbraucherkreise) versorgen kann, gleichzeitig über den Defekt jedoch Luft verloren geht. Nachteilig bei den bekannten Mehrkreis-Schutzventilen ist, dass der maximale Druck in der Bremsanlage gleich dem Öffnungsdruck des defekten Kreises bei Abriss ist. Nachteilig ist ferner, dass der Druck kurzzeitig bis auf den Schließdruck des defekten Kreises abfällt. Nachteilig ist insbesondere der relativ hohe Energieverlust bei einem Kreisausfall, da defekte Kreise relativ spät erkannt und abgesperrt werden.

Die Aufgabe der vorliegenden Erfindung besteht deshalb darin, ein Verfahren und eine Vorrichtung der eingangs genannten Art so auszubilden, dass ein Defekt oder Ausfall eines Druckluftverbraucherkreises frühzeitig erkannt werden kann.

Diese Aufgabe wird verfahrensmäßig durch die Erfindung gemäß Anspruch 1 gelöst. Eine Vorrichtung zur Durchführung des Verfahrens ist im Anspruch 7 angegeben.

Vorteilhafte und zweckmäßige Weiterbildungen der Erfindung sind in den Unteransprüchen angegeben.

Durch die Erfindung wird der große Vorteil erzielt, dass defekte oder ausgefallene Druckluftverbraucherkreise frühzeitig erkannt und abgesperrt werden, wodurch der Energieverlust bei Ausfall eines Druckluftverbraucherkreises minimal gehalten werden kann. Insgesamt wird die Fahrzeugsicherheit wesentlich erhöht.

Die Erfindung soll nachfolgend anhand der beigefügten Zeichnung, in der ein Ausführungsbeispiel dargestellt ist, näher erläutert werden.

Es zeigen
- Fig. 1: ein Blockschaltbild einer erfindungsgemäßen Vorrichtung (Druckluftanlage) und
- Fig. 2 u. 3: Diagramme zur näheren Erläuterung des Verfahrens zur Erkennung des Defekts oder Ausfalls eines Verbraucherkreises.

Druckmittelleitungen sind in der Zeichnung durchgezogene Linien, elektrische Leitungen sind gestrichelte Linien.

Die Zeichnung zeigt eine Druckluftanlage 2 mit einem Druckluftversorgungsteil 4 und einem Verbraucherteil 6. Der Druckluftversorgungsteil 4 umfasst einen Kompressor 7, eine Kompressor - Steuereinrichtung 8 und ein Lufttrocknerteil 10.

Der Verbraucherteil 6 weist eine Druckluftverteilerleitung 14, mehrere elektrisch betätigbare Ventile, vorzugsweise Magnetventile 16, 18, 20, 22, 24 mit Rückstellfeder und mehrere über die Magnetventile mit Druckluft versorgte Verbraucherkreise 26, 28, 30, 32, 34, 36, 38 auf.

Vom Kompressor 7 führt eine Druckluftversorgungsleitung 40 über ein Filter 42, einen Lufttrockner 44 und ein Rückschlagventil 46 zur Verteilerleitung 14, von der zu den Magnetventilen führende Leitungen 48, 50, 52, 54, 56 abzweigen. Von den Magnetventilen führen Druckluftleitungen 58, 60, 62, 64, 66 zu den Verbraucherkreisen. Die Leitung 62 verzweigt sich in zu den Kreisen 30 und 32 führenden Leitungen 62', 62", wobei in der Leitung 62" noch ein Rückschlagventil 68 angeordnet ist. In der Versorgungsleitung 52 ist ein Druckbegrenzer 70 angeordnet. Hinter dem Druckbegrenzer 70 zweigt die zum Magnetventil 22 führende Leitung 54 ab. Die Leitung 64 verzweigt sich in zu den Kreisen 34 und 36 führenden Leitungen 64' und 64".

Drucksensoren 72, 74, 76, 78, 80, 82 überwachen den Druck in den Verbraucherkreisen und in der Verteilerleitung 14 und geben den jeweiligen Druck als Drucksignal an eine elektronische Steuereinheit 84, die die Magnetventile steuert.

Die Verbraucherkreise 26, 28 können beispielsweise Betriebsbremskreise sein. Der Verbraucherkreis 30 kann ein Anhängerbremskreis sein, wobei normalerweise zwei Leitungen, eine Versorgungs- und eine Bremsleitung, zum Anhänger führen. Der Verbraucherkreis 32 kann ein Feststellbremskreis mit Federspeicher sein. Die Verbraucherkreise 34 und 36 können Nebenverbrauchskreise, wie Fahrerhausfederung, Türsteuerung etc., d.h. alles was nichts mit den Bremskreisen zu tun hat, sein. Der Verbraucherkreis 38 kann ein Hochdruckkreis sein.

Die Betriebsbremskreise 26, 28 weisen Druckluftbehälter 90, 92 entsprechend den Richtlinien 98/12/ EG auf.

Die erfindungsgemäße Druckluftanlage ermöglicht, auf Druckluftbehälter in den Kreisen 30, 32, 34, 36 und auch im Hochdruckkreis 38 zu verzichten. Es ist z.B. zulässig, andere Verbraucherkreise aus den Betriebsbremskreisen (Kreise 26 und 28) zu versorgen, wenn die Bremsfunktion oder Bremswirkung der Betriebsbremskreise 26 und 28 nicht beeinträchtigt wird.

Der Kompressor 7 wird von der Kompressorsteuerung 8 mechanisch (pneumatisch) über eine Leitung 40' gesteuert. Die Kompressorsteuerung 8 umfasst ein durch die elektronische Steuereinheit 84 schaltbares Magnetventil 94 mit kleiner Nennweite, das im stromlosen Grundzustand, wie dargestellt, entlüftet ist, wodurch der Kompressor 7 eingeschaltet ist. Wenn der Kompressor 7 ausgeschaltet werden soll, weil beispielsweise sämtliche Verbraucherkreise mit Druckluft aufgefüllt sind, schaltet die Steuereinheit 84 das Magnetventil 94 um, so dass der druckbetätigbare Kompressor über die Leitung 40' ausgeschaltet wird. Wird das Magnetventil 94, weil beispielsweise ein Verbraucherkreis Druckluft benötigt, stromlos geschaltet, wird das Magnetventil 94 wieder in den in der Zeichnung dargestellten Grundzustand geschaltet, wodurch die Leitung 40' entlüftet wird, so dass der Kompressor 7 eingeschaltet wird.

Der Lufttrocknerteil 10 umfasst ein Magnetventil 100 mit kleiner Nennweite, dessen Eingang 102 mit der Verteilerleitung 14 verbunden ist und über dessen Ausgang 104 ein Abschaltventil 106 pneumatisch geschaltet wird, das mit der Versorgungsleitung 40 des Kompressors 7 verbunden ist und zum Entlüften des Lufttrockners dient.

Wenn das Magnetventil 100 durchgeschaltet ist, fördert der Kompressor 7 nicht mehr in die Verbraucherkreise, sondern über das Ventil 106 ins Freie. Gleichzeitig strömt trockene Luft aus der Verteilerleitung 14 (aus den Behältern 90, 92 der Betriebsbremskreise) über das Magnetventil 100 über eine Drossel 108 und ein Rückschlagventil 110 durch den Lufttrockner 44 zur Regeneration seines Trockenmittels und weiter über den Filter 42 und das Ventil 106 ins Freie.

Das Bezugszeichen 112 bezeichnet ein Überdruckventil.

Die Magnetventile 16, 18, 20, 22, 24 werden von der Steuereinheit 84 gesteuert, wobei die Magnetventile 16 bis 22 der Verbraucherkreise 26 bis 34 im stromlosen Grundzustand offen sind, während das Magnetventil 24 des Hochdruckkreises im stromlosen Grundzustand geschlossen ist. Es können auch vorgesteuerte Magnetventile eingesetzt werden. Der Druck in den Kreisen wird unmittelbar an den Magnetventilen überwacht durch die Drucksensoren 72, 74, 76, 78, 80.

Sollte in einem Verbraucherkreis, beispielsweise im Kreis 30 (Anhängerbremskreis) der Druck absinken, erfolgt die Druckluftversorgung durch die Betriebsbremskreise 26 und 28 mit, wobei der Druck in den Nebenverbraucherkreisen 30 bis 36 durch den Druckbegrenzer 70 auf ein niedrigeres Niveau, beispielsweise 8,5 bar, als das Druckniveau, beispielsweise 10,5 bar, des Betriebsbremskreises eingestellt wird (vgl. unten). Der Hochdruckkreis 38 ist abgesperrt und steht somit nicht mit den übrigen Kreisen in Verbindung. Der Hochdruckkreis weist in der Regel einen höheren Druck als die anderen Verbraucherkreise, bspw. 12,5 bar, auf.

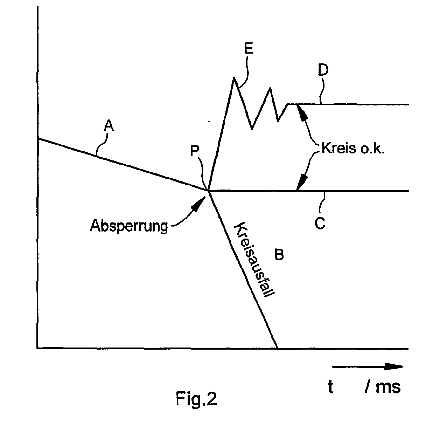

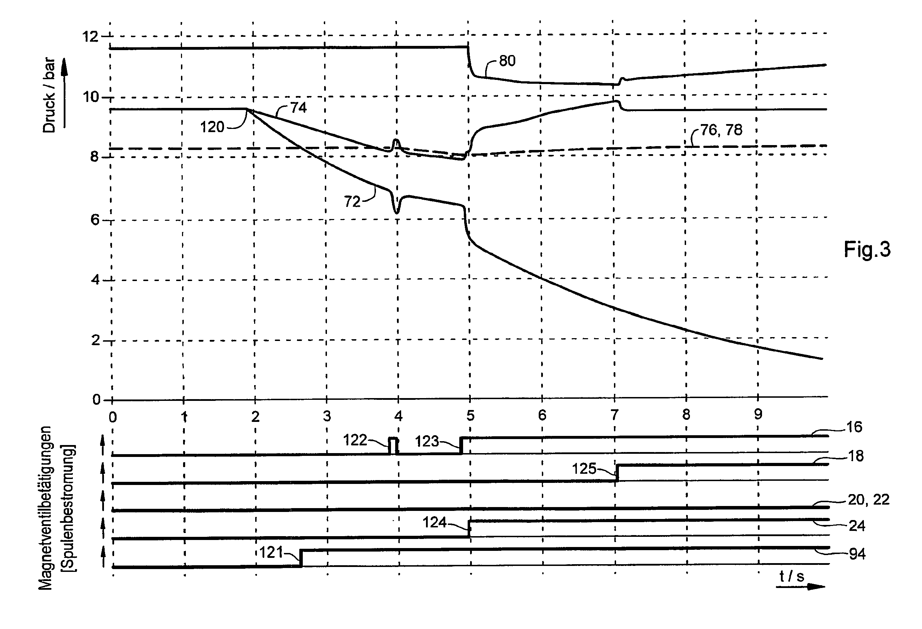

Anhand der Figuren 2 und 3 soll nachfolgend das erfindungsgemäße Verfahren näher erläutert werden.

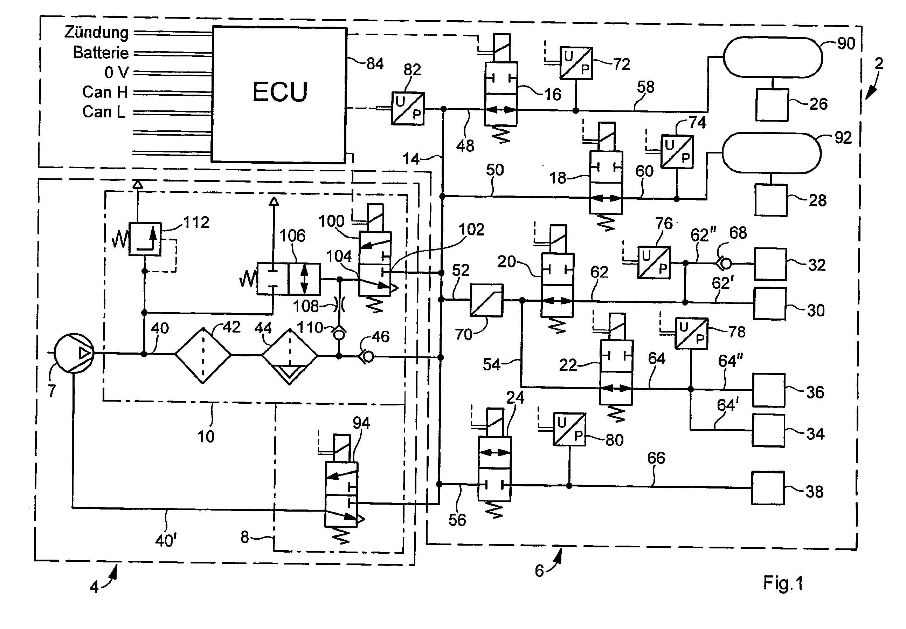

Wie erläutert, kann der Druck in einem Verbraucherkreis 26 bis 38 durch Drucksensoren 72 bis 80 gemessen werden; aufgrund des in Fig. 1 gezeigten Ortes dieser Drucksensoren misst ein solcher Drucksensor den Druck jedoch nicht direkt im jeweiligen Verbraucherkreis, sondern er misst ihn am Eingang der Druckversorgungsleitung 58 bis 66 zum Verbraucherkreis, d.h. am Ausgang des jeweilig zugeordneten Magnetventils 16 bis 24.

Der von einem Drucksensor 72 bis 80 erfasste Druck ist also nur im druckausgeglichenen Zustand gleich dem Druck im zugeordneten Verbraucherkreis 26 bis 38 selbst; anderenfalls ist er ungleich, wenn über eine Druckleitung 48 bis 66 eine Nachspeisung aufgrund des Druckluftverbrauches im Kreis stattfindet, und Versorgungsluft durch die Druckleitung strömt. Über der Druckleitung bildet sich eine dynamische Druckdifferenz aus, um die der Druck im Kreis geringer ist als der am Magnetventil gemessene Druck, und dieser Druckverlust ist am allergrößten bei einem Ausfall des Verbraucherkreises (z.B. durch einen Leitungsabriss), wenn nämlich am zum Kreis weisenden Anschluss der Druckversorgungsleitung 58 bis 64 durch den Abriss Atmosphärendruck herrscht, und am Drucksensormesspunkt der um den Druckabfall am Magnetventil reduzierte Druck in der Verbindungsleitung 14 gemessen wird.

Bei den sehr hohen Luftströmen bei einem solchen Abriss (Größenordnung 5000 l/m) werden die pneumatisch gekoppelten Druckräume auch entlüftet, was bedeutet, dass beispielsweise der Druck in der Verbindungsleitung 14 ebenfalls stark absinkt.

In einem durch derartig starke Entlüftungsströme gekennzeichneten Zustand lässt sich nur schwer aus den Messwerten der Drucksensoren 72 bis 80 selbst ein zuverlässiger Gesamtzustand rekonstruieren, der ein eindeutiges Erkennen des ausgefallenen Druckluftkreises zulässt.

Erfindungsgemäß wird zur Erkennung des defekten Druckluftverbraucherkreises die Wirkung des Entlüftungsstromes auf einen Kreis bestimmt, wenn die Entlüftung kurzzeitig ausgeschaltet wird. Nur am defekten Kreis sinkt der Druck noch weiter ab, in allen anderen Kreisen ist entweder kein Einfluss zu erkennen, oder es findet eine Druckerhöhung statt, weil sich durch die ausbleibende Entlüftung über den defekten Kreis durch die in den Druckluftbehältern vorhandene Luft der Druck wieder erhöhen kann. Dies ist schematisch in der Fig. 2 dargestellt.

Bei Verbraucherkreisen, bei denen infolge eines Defektes oder infolge einer Bremsbetätigung der Druck abfällt, siehe Linie A in Fig. 2, und eine Druckschwelle, beispielsweise im Punkt P, unterschreitet oder der negative Druckgradient (zeitlicher Druckabfall) einen Schwellwert unterschreitet, werden deren oder sämtliche normal offenen Magnetventile durch die elektronische Steuereinheit 84 kurzzeitig abgesperrt und es wird der Druckverlauf nach dem Absperren durch die Steuereinheit verfolgt. Fällt der Druck trotz Absperrens weiter ab, wie dies durch die Linie B angedeutet ist, ist dies ein Indiz für einen echten Defekt, beispielsweise durch Leitungsbruch oder Leitungsabriss, was durch die elektronische Steuereinheit 84 mittels der Drucksignale der Drucksensoren erkannt wird. Die Steuereinheit schaltet dann das dem defekten Verbraucherkreis zugeordnete Magnetventil ab und sperrt dadurch den defekten Kreis insgesamt ab, so dass die intakten Kreise unbeeinflusst von defekten Kreisen ordnungsgemäß weiterarbeiten können.

Ändert sich der Druck im abgesperrten Kreis ab dem Absperrzeitpunkt P nicht (Linie C), was bei einem intakten Kreis ohne Druckluftbehälter der Fall ist, oder steigt der Druck sogar auf einen höheren Wert als zum Zeitpunkt P (Linie D), was bei einem intakten Kreis mit Druckluftbehälter der Fall ist, wobei anfänglich noch Druckschwankungen E auftreten können, ist dies ein Indiz für einen intakten Kreis. Es werden dann keine Maßnahmen von der Steuereinheit 84 ergriffen.

Die Schwellwerte können auch durch dynamische Druckstöße im Luftfederungssystem oder durch sonstige dynamische Drucküberschwingungen oder dynamische Druckänderungen in den Verbraucherkreisen unterschritten werden, die keine eigentlichen Defekte darstellen, aber als solche von der Steuereinheit 84 interpretiert werden. Um zu verhindern, dass in solchen Fällen Verbraucherkreise, die fälschlicherweise als defekte Kreise erkannt werden, abgesperrt werden, ist gemäß der Erfindung vorgesehen, das kurzzeitige Absperren mehrere Male nacheinander, sozusagen gepulst, durchzuführen und nach jedem kurzzeitigem Absperren eine kurze Beobachtungszeit, beispielsweise von 0,4 sek. vorzusehen. Erst wenn nach dem mehrmaligen gepulsten Absperren der Druck weiter gefallen ist, wird der entsprechende Verbraucherkreis endgültig abgesperrt. Der endgültig abgesperrte Verbraucherkreis wird weiterhin daraufhin überwacht, ob er doch nicht defekt ist oder nicht mehr defekt ist.

Anhand der Figur 3 soll beispielhaft die Erkennung des Ausfalles des Bremskreises 26 näher erläutert werden.

Mit dem Ausfall des Bremskreises 26 durch Leitungsabriss zum Zeitpunkt 120 nach Fig. 3 sinkt der vom Drucksensor 72 gemessene Druckwert sehr stark ab; als Folge reduziert sich, wie erläutert, der Druck im pneumatisch verbundenen Bremskreis 28 (siehe Kurve 74 in Fig. 3) und in der Verbindungsleitung 14 ebenfalls stark (nicht in Fig. 3 gezeigt). Der Druckabfall in der Verbindungsleitung 14 hat zur Folge, dass zum Zeitpunkt 121 das den Kompressor einschaltende Magnetventil 94 betätigt wird. Aufgrund des nun erkannten Druckabfalls im Kreis 26 wird zum Zeitpunkt 122 ein Testimpuls von z.B. 0,2 Sekunden auf den Steuereingang des Magnetventils 16 gegeben, der das Magnetventil für diesen Zeitbereich sperrt; das Magnetventil 16 wird ausgewählt, da aufgrund des im Vergleich zum Kreis 28 stärkeren Druckabfalls dort ein Leitungsabriss zunächst zu vermuten ist.

Als Folge dieser Sperrung erhöht sich im nicht betroffenen Bremskreis 28 der Druck am Drucksensor 74 kurzzeitig, weil mit einer Unterbrechung der Entlüftung durch den defekten Kreis 26 der Druckluftbehälter 92 den intakten Kreis 28 wieder belüften kann. Bezüglich des defekten Kreises 26 findet am Drucksensor 72 während der Zeit der Ventilsperre jedoch ein verstärkter Druckabfall statt, da die Nachspeisung durch die intakten Kreise unterbrochen ist. Der Druck an den Drucksensoren 76, 78 der Kreise 30, 36 ist beim Testimpuls unverändert; der Druck an diesen Kreisen ist während des gesamten Entlüftungsvorganges ohnehin wenig verändert, da der Druckbegrenzer 70 für eine Entkopplung der Drucksensoren von der Verteilungsleitung 14 sorgt. Da sich einzig beim Kreis 26 der Druck während des Testpulses verstärkt absenkt, wird die Vermutung, dass dieser Kreis defekt ist, erhärtet. Um zu einer Gewissheit zu gelangen, ob diese Schlussfolgerung richtig ist, wird dieses Testen durch pulsartiges Abschalten des Ventils 16 mehrere Male wiederholt; im Ausführungsbeispiel wird dies zum Zeitpunkt 123 ein zweites und letztes Mal durchgeführt. Erneut fällt am Kreis 26 der Druck verstärkt ab, und nun wird endgültig festgestellt, dass der Kreis 26 der defekte Kreis ist, und er bleibt im Weiteren dann dauerhaft gesperrt.

Zur Wiederbelüftung des intakten Bremskreises 28 wird zum Zeitpunkt 124 das Magnetventil 24 des Hochdruckkreises 38 in den geöffneten Zustand geschaltet, so dass eine schnelle Wiederbelüftung des intakten Kreises 28 und gegebenenfalls der pneumatisch gekoppelten, ebenfalls intakten Kreise 30 bis 36 erfolgen kann. Um das Wiederbelüften in der gewünschten Weise durchführen zu können, weist der Hochdruckkreis 38 einen Druckluftbehälter auf (nicht dargestellt). Am Drucksensor 80 ist der Druckabfall im Hochdruckkreis während dieser schnellen Wiederbelüftung zu erkennen, siehe Abfall zum Zeitpunkt 124. Nach erfolgter Wiederbelüftung wird zum Zeitpunkt 125 der Kreis 28 für eine bestimmte Zeit abgesperrt. Während dieser Zeit wird der Hochdruckkreis über den laufenden Kompressor wiederbefüllt. Zum Abschluss dieser Wiederbefüllung (in der Fig. 3 nicht mehr dargestellt) werden die Steuersignale für die Magnetventile 94 und 18 wieder zurückgesetzt.

Anstatt wie erläutert das Magnetventil des vermutlich defekten Kreises mit dem starken Druckabfall testweise abzusperren, können auch mehrere andere oder überhaupt alle Magnetventile abgesperrt werden; es ergibt sich dann nämlich ein gleichartiger Druckverlauf, da jede derartige Sperrung dazu geeignet ist, die Nachspeisung des defekten Kreises über die Verbindungsleitung 14 zu unterbinden.

Anstelle des Druckes kann auch eine andere Zustandsgröße, wie Luftmenge, Luftmasse und Energie, in den Druckluftverbraucherkreisen überwacht werden.

## Patentansprüche

1. Verfahren zum Erkennen eines Defektes oder Ausfalls eines Duckluftverbraucherkreises in einer Druckluftanlage für Fahrzeuge, bei dem der Druck in den Leitungen zu den Druckluftverbraucherkreisen laufend überwacht und ausgewertet wird, **gekennzeichnet durch** folgende Schritte:
- mehrmaliges aufeinander folgendes kurzzeitiges Absperren (gepulstes Absperren)wenigstens eines der Druckluftverbraucherkreise,
- Messen der Werte und/oder Ermitteln von Gradienten einer Zustandsgröße (Druck, Luftmenge, Luftmasse, Energie) während der Absperrzeit in wenigstens einem der Druckluftverbraucherkreise,
- Vergleich der Werte und/oder Gradienten jeweils mit einem Schwellwert,
- Erkennen eines Druckluftverbraucherkreises als defekt oder ausgefallen, wenn dessen Zustandsgrößenwerte und/oder Zustandsgrößengradienten den Schwellwert in der Absperrphase und/oder nach der Absperrphase unterschreiten.

2. Verfahren nach Anspruch 1, **dadurch gekennzeichnet, dass** ein endgültiges bzw. dauerhaftes Absperren der als defekt oder ausgefallen erkannten Luftverbraucherkreises erfolgt.

3. Verfahren nach Anspruch 1, **dadurch gekennzeichnet, dass** während der kurzen Absperrphasen der Verlauf der gemessenen Werte und/oder der ermittelten Gradienten der Zustandsgröße verfolgt wird und dass die Druckluftverbraucherkreise, deren Zustandsgrößenwerte und/oder -gradienten den jeweiligen Schwellwert auch nach Ablauf der vorgebbaren Zahl von kurzen Absperrphasen unterschreiten, endgültig bzw. dauerhaft abgesperrt werden.

4. Verfahren nach einem der vorhergehenden Ansprüche, **dadurch gekennzeichnet, dass** die intakten Druckluftverbraucherkreise nach dem endgültigen Absperren des defekten Druckluftverbraucherkreises bzw. der defekten Druckluftverbraucherkreise wieder aufgefüllt werden.

5. Verfahren nach Anspruch 1, 2 oder 3, **dadurch gekennzeichnet, dass** nach dem endgültigen Absperren der defekten Druckluftverbraucherkreise die Absperrung der intakten Druckluftverbraucherkreise wieder aufgehoben wird.

6. Verfahren nach Anspruch 1 oder 3, **dadurch gekennzeichnet, dass** der Schwellwert der einzustellenden Zustandsgröße im jeweiligen Druckluftverbraucherkreis entspricht.

7. Vorrichtung zum Erkennen eines Defektes oder Ausfalls eines Druckluftverbraucherkreises mit einer Druckluftanlage, die einen einen Kompressor aufweisenden Druckluftversorgungsteil und einen Verbraucherteil mit mehreren Druckluftverbraucherkreisen aufweist, die über elektrisch betätigbare Ventile mit Druckluft versorgt werden, wobei der Druck in den Druckluftverbraucherkreisen durch Sensoren überwacht wird, deren elektrische Signale von einer elektronischen Steuereinheit ausgewertet werden, die die elektrisch betätigbaren Ventile steuert, **dadurch gekennzeichnet, dass** wenigstens eines der elektrisch betätigbaren Ventile (16, 18, 20, 22) der Druckluftverbraucherkreise (26, 28, 30, 32, 34, 36) zur Erkennung des Defektes oder Ausfalls eines Druckluftverbraucherkreises durch die Steuereinheit (84) mehrmals aufeinander folgend kurzzeitig in einen Absperrzustand schaltbar ist, wobei die Steuereinheit in der Absperrzeit gemessene Werte und/oder ermittelte Gradienten einer Zustandsgröße (Druck, Luftmenge, Luftmasse, Energie) jeweils mit einem Schwellwert vergleicht und den Druckluftverbraucherkreis, dessen Zustandsgrößenwerte und/oder -gradienten den Schwellwert unterschreiten als defekten oder ausgefallenen Druckluftverbraucherkreis ermittelt.

8. Vorrichtung nach Anspruch 7, **dadurch gekennzeichnet, dass** die Steuereinheit (84) das dem als defekt oder ausgefallen ermittelten Druckluftverbraucherkreis zugeordnete elektrisch betätigbare Ventil im abgesperrten Zustand belässt, während die elektrisch betätigbaren Ventile der anderen Druckluftverbraucherkreise wieder in den offenen Grundzustand geschaltet werden.

9. Vorrichtung nach Anspruch 7, **dadurch gekennzeichnet, dass** die Steuereinheit (84) in den Absperrphasen die Werte und/oder die Gradienten der Zustandsgröße ermittelt und nach Ablauf einer vorgebbaren Zahl von Absperrphasen die Druckluftverbraucherkreise, deren Zustandsgrößenwerte und/oder -gradienten den jeweiligen Schwellwert unterschreiten, als defekte oder ausgefallene Kreise erkennt und endgültig bzw. dauerhaft abschaltet.

10. Vorrichtung nach Anspruch 9, **dadurch gekennzeichnet, dass** die Steuereinheit (84) die elektrisch betätigbaren Ventile der intakten Druckluftverbraucherkreise wieder in den offenen stromlosen Grundzustand schaltet.

11. Vorrichtung nach Anspruch 9 oder 10, **dadurch gekennzeichnet, dass** die intakten Druckluftverbraucherkreise nach Schaltung der elektrisch betätigbaren Ventile in deren offenen Grundzustand wieder aufgefüllt werden.

12. Vorrichtung nach Anspruch 7, **dadurch gekennzeichnet, dass** der Schwellwert dem Wert der einzustellenden Zustandgröße im jeweiligen Verbraucherkreis entspricht.

13. Vorrichtung nach einem der Ansprüche 7 bis 12, **dadurch gekennzeichnet, dass** die elektrisch betätigbaren Ventile Magnetventile sind.

## Claims

1. Method for identifying a defect or failure of a compressed air consumer circuit in a compressed air system for motor vehicles, in which the pressure in the lines to the compressed air consumer circuits is routinely monitored and evaluated, **characterised by** the following steps:
- repeated successive brief closing off (pulsed closing off) of at least one of the compressed air consumer circuits,
- measurement of the values and/or determination of gradients of a variable (pressure, air quantity, air mass, energy) during the closing off time in at least one of the compressed air consumer circuits,
- comparison of the values and/or gradients in each case with a threshold value,
- identification of a compressed air consumer circuit as being defective or having failed if its variable values and/or variable gradients fall below the threshold value in the closing off phase and/or after the closing off phase.

2. Method according to claim 1, **characterised in that** definitive or permanent closing off of the air consumer circuit identified as being defective or having failed is carried out.

3. Method according to claim 1, **characterised in that** during the brief closing off phases the change over time of the measured values and/or of the determined gradients of the variable is monitored, and **in that** the compressed air consumer circuits whose variable values and/or gradients fall below the respective threshold value also after completion of the predetermined number of brief closing off phases are closed off definitively or permanently.

4. Method according to any one of the preceding claims, **characterised in that** the sound compressed air consumer circuits are filled again after the definitive closing off of the defective compressed air consumer circuit or defective compressed air consumer circuits.

5. Method according to claim 1, 2 or 3, **characterised in that**, after the definitive closing off of the defective compressed air consumer circuits, the closing off of the sound compressed air consumer circuits is removed again.

6. Method according to claim 1 or 3, **characterised in that** the threshold value corresponds to the variable that is to be established in the compressed air consumer circuit in question.

7. Device for identifying a defect or failure of a compressed air consumer circuit having a compressed air system which comprises a compressed air supply part, having a compressor, and a consumer part having a plurality of compressed air consumer circuits which are supplied with compressed air by way of electrically operable valves, the pressure in the compressed air consumer circuits being monitored by sensors whose electrical signals are evaluated by an electronic control unit which controls the electrically operable valves, **characterised in that** at least one of the electrically operable valves (16, 18, 20, 22) of the compressed air consumer circuits (26, 28, 30, 32, 34, 36) can repeatedly be briefly switched in succession into a closing off state by the control unit (84) in order to identify a defect or failure of a compressed air consumer circuit, the control unit comparing values and/or gradients of a variable (pressure, air quantity, air mass, energy) measured or determined during the closed off period with in each case a threshold value and identifying the compressed air consumer circuit whose variable values and/or gradients fall below the threshold value as being a defective or failed compressed air consumer circuit.

8. Device according to claim 7, **characterised in that** the control unit (84) leaves the electrically operable valve associated with the compressed air consumer circuit identified as being defective or having failed in the closed off state, while the electrically operable valves of the other compressed air consumer circuits are switched into the open normal state again.

9. Device according to claim 7, **characterised in that**, in the closing off phases, the control unit (84) determines the values and/or gradients of the variable and, after completion of a predetermined number of closing off phases, identifies the compressed air consumer circuits whose variable values and/or gradients fall below the respective threshold value as circuits that are defective or have failed and switches them off definitively or permanently.

10. Device according to claim 9, **characterised in that** the control unit (84) switches the electrically operable valves of the sound compressed air consumer circuits into the open non-energised normal state again.

11. Device according to claim 9 or 10, **characterised in that** the sound compressed air consumer circuits are filled again after the electrically operable valves have been switched into their open normal state.

12. Device according to claim 7; **characterised in that** the threshold value corresponds to the value of the variable that is to be established in the consumer circuit in question.

13. Device according to any one of claims 7 to 12, **characterised in that** the electrically operable valves are solenoid valves.

## Revendications

1. Procédé pour détecter un défaut ou une défaillance d'un circuit consommateur d'air comprimé dans un système à air comprimé pour véhicules, dans lequel la pression dans les conduites menant aux circuits consommateurs d'air comprimé est surveillée et évaluée continûment, **caractérisé par** les étapes suivantes :
- nombreux arrêts brefs successifs (arrêt pulsé) au moins d'un des circuits consommateurs d'air comprimé,
- mesure des valeurs et/ou détection des gradients d'un paramètre d'état (pression, volume d'air, masse d'air, énergie) pendant le temps d'arrêt dans au moins un des circuits consommateurs d'air comprimé,
- comparaison des valeurs et/ou gradients respectivement à une valeur de seuil,
- détection d'un circuit consommateur d'air comprimé comme étant défectueux ou en panne, lorsque ses valeurs de paramètre d'état et/ou gradients de valeur d'état tombent en dessous de la valeur de seuil lors de la phase d'arrêt et/ou après la phase d'arrêt.

2. Procédé selon la revendication 1, **caractérisé en ce qu'**un arrêt définitif ou durable du circuit consommateur d'air détecté comme étant en panne ou défectueux se produit.

3. Procédé selon la revendication 1, **caractérisé en ce que**, pendant les brèves phases d'arrêt, le tracé des valeurs mesurées et/ou des gradients détectés des paramètres d'état est poursuivi et **en ce que** les circuits consommateurs d'air comprimé, dont les valeurs et/ou gradients de paramètres d'état tombent au-dessous de la valeur de seuil respective après écoulement d'un nombre prédéterminé de brèves phases d'arrêt, sont arrêtés définitivement ou durablement.

4. Procédé selon l'une des revendications précédentes, **caractérisé en ce que** les circuits consommateurs d'air comprimé intacts sont de nouveau remplis après l'arrêt définitif du ou des circuits consommateurs d'air comprimé défectueux.

5. Procédé selon la revendication 1, 2 ou 3, **caractérisé en ce que** l'arrêt des circuits consommateurs d'air comprimé intacts est supprimé après arrêt des circuits consommateurs d'air comprimés défectueux.

6. Procédé selon la revendication 1 ou 3, **caractérisé en ce que** la valeur de seuil correspond à la paramètre d'état à régler dans le circuit consommateur d'air comprimé respectif.

7. Dispositif pour détecter un défaut ou une panne d'un circuit consommateur d'air comprimé dans un système d'air comprimé, qui présente une partie d'alimentation en air comprimé possédant un compresseur et une partie de consommation comportant plusieurs circuits consommateurs d'air comprimé, qui sont alimentés en air comprimé par l'intermédiaire de soupapes commandées électriquement, dans lequel la pression dans les circuits consommateurs d'air comprimé est surveillée par des capteurs, dont les signaux électriques sont évalués par une unité de commande électronique, qui commande les soupapes commandées électriquement, **caractérisé en ce qu'**au moins une des soupapes commandées électriquement (16, 18, 20, 22) des circuits consommateurs d'air comprimé (26, 28, 30, 32, 34, 36) est commutée dans un état d'arrêt plusieurs fois brièvement successivement pour détecter le défaut ou la panne d'un circuit consommateur d'air comprimé par l'unité de commande (84), où l'unité de commande compare pendant le temps d'arrêt les valeurs mesurées et/ou les gradients détectés d'une paramètre d'état (pression, volume d'air, masse d'air, énergie) respectivement à une valeur de seuil et détecte comme circuit consommateur d'air comprimé défectueux ou en panne le circuit consommateur d'air comprimé dont les valeurs et/ou gradients de paramètres d'état tombent en dessous de la valeur de seuil.

8. Dispositif selon la revendication 7, **caractérisé en ce que** l'unité de commande (84) laisse dans l'état arrêté la soupape commandée électriquement associée au circuit consommateur d'air comprimé détecté comme étant défectueux ou en panne, tandis que les soupapes commandées électriquement des autres circuits consommateurs d'air comprimé sont de nouveau commutées dans l'état fondamental ouvert.

9. Dispositif selon la revendication 7, **caractérisé en ce que** l'unité de commande (84) lors des phases d'arrêt détecte les valeurs et/ou les gradients des paramètres d'état et après écoulement d'un nombre prédéterminé de phases d'arrêt détecte comme circuits défectueux ou en panne les circuits consommateurs d'air comprimé, dont les valeurs et/ou gradients de paramètres d'état tombent en dessous de la valeur de seuil respective, et les arrête définitivement ou durablement.

10. Dispositif selon la revendication 9, **caractérisé en ce que** l'unité de commande (84) commute de nouveau dans l'état fondamental sans courant ouvert les soupapes commandées électriquement des circuits consommateurs d'air comprimé intacts.

11. Dispositif selon la revendication 9 ou 10, **caractérisé en ce que** les circuits consommateurs d'air comprimé intacts sont de nouveau remplis après commutation des soupapes commandées électriquement dans leur état fondamental ouvert.

12. Dispositif selon la revendication 7, **caractérisé en ce que** la valeur de seuil correspond à la valeur des paramètres d'état à régler dans le circuit consommateur respectif.

13. Dispositif selon l'une des revendications 7 à 12, **caractérisé en ce que** les soupapes commandées électriquement sont des électrovannes.
